# EUROPEAN PATENT APPLICATION

(11) **EP 4 589 446 A1**
(43) Date of publication of application: **23.07.2025**
(21) Application number: 23876428.6
(22) Date of filing: 11.09.2023
(51) Int. Cl.: G06F 13/42, G06F 13/40, G06F 13/38

(54) **ELECTRONIC DEVICE, AND PCIE TOPOLOGY CONFIGURATION METHOD AND APPARATUS THEREOF**

(30) Priority: 13.10.2022 CN 202211253037
(71) Applicant: xFusion Digital Technologies Co., Ltd., Zhengzhou, Henan 450000 (CN)
(72) Inventor: RAN, Maoliang, Zhengzhou, Henan 450000 (CN)
(74) Representative: MERH-IP Matias Erny Reichl Hoffmann Patentanwälte PartG mbB
(86) International application number: PCT/CN2023/117989
(87) International publication number: WO 2024/078223

(57) **Abstract**

An electronic device and a PCIe topology configuration method and apparatus thereof relate to the technical field of computers. The electronic device includes at least one main processor, a plurality of graphics processing units, and a management chip. Each main processing unit and the plurality of graphics processing units are connected to at least one switching component through a peripheral component interconnect PCle bus, and each switching component is in communication connection with the management chip. The management chip is configured to generate switching information corresponding to a target application scenario according to the first information, where the first information includes type identifier information and/or configuration information of each of the graphics processing units. The switching component is configured to switch a PCIe bus connection relationship between the plurality of graphics processing units and a corresponding main processor according to the switching information. Thus, the configured topology adapts to a current target application scenario, which facilitates optimal application performance of the electronic device. In this way, manual intervention can be reduced in a process of configuring the topology, thereby greatly improving configuration efficiency of a PCle bus topology in the electronic device.

## Description

This application claims priority to Chinese Patent Application No. 202211253037.6, filed with the China National Intellectual Property Administration on October 13, 2022, and entitled "ELECTRONIC DEVICE AND PCIE TOPOLOGY CONFIGURATION METHOD AND APPARATUS THEREOF", which is incorporated herein by reference in its entirety.

### TECHNICAL FIELD

The present application relates to the field of computer technology, and in particular to an electronic device and a PCle topology configuration method and apparatus thereof.

### BACKGROUND

A GPU (graphics processing unit) server can have a variety of GPU options. GPUs of different types are usually applicable to scenarios such as training, inference, and high performance computing (high performance computing, HPC). Enterprise users expect to use one GPU server to cover as many scenarios as possible. However, in each scenario, a peripheral component interconnect express PCle bus topology architecture used to support GPU communication in the GPU server needs to be configured accordingly. Currently, the configuration of the PCle bus topology architecture is mostly manually adjusted by professionals, resulting in low efficiency.

### SUMMARY

The present application provides an electronic device and a PCle topology configuration method and apparatus thereof, which can realize adaptive switching of a PCle topology in a server.

According to a first aspect, the present application provides an electronic device. The electronic device includes at least one main processor, a plurality of graphics processing units, and a management chip, where each main processor and the plurality of graphics processing units are connected to at least one switching component through a peripheral component interconnect PCle bus, and each switching component is in communication connection with the management chip. The management chip is configured to generate switching information corresponding to a target application scenario according to first information, where the first information includes type identifier information and/or configuration information of each of the graphics processing units; and the switching component is configured to switch a PCIe bus connection relationship between the plurality of graphics processing units and the corresponding main processor according to the switching information.

In the embodiment, the electronic device may be a workstation, a GPU server, a hyper terminal and the like. The plurality of graphics processing units may be GPUs for training/inference scenarios in deep learning, GPUs for graphics rendering scenarios, or GPUs for HPC scenarios, but are not limited thereto. The plurality of graphics processing units are connected to the switching component through a PCle bus, and a communication path between each of the GPUs and the corresponding main processor may be switched by the switching component.

In a possible implementation of the embodiment, the management chip (for example, a baseboard management controller, BMC) of the electronic device may monitor and obtain the type identifier information or other configuration information of the graphics processing units after the graphics processing units are connected to the electronic device, and generate switching information corresponding to a target application scenario applicable to a current graphics processing unit, to perform a corresponding action by controlling a switching component and configure a PCle bus topology between the plurality of graphics processing units and the corresponding main processor. Thus, the configured topology is adapted to the current application scenario, which is conducive to the electronic device achieving optimal application performance. In addition, manual intervention may be reduced in a process of configuring the topology, thereby greatly improving configuration efficiency of the PCle bus topology in the electronic device.

In some possible implementations, the electronic device includes a firmware module. The firmware module is configured to read the type identifier information of each of the graphics processing units, to report the type identifier information as the first information to the management chip.

In the implementation, the firmware module may be BIOS firmware stored in storage of the electronic device. The BIOS is used to automatically read the type identifier information of the GPU and reports the type identifier information of the GPU to the BMC, without the need for manually inputting configuration information. This forms a series of closed-loop control from automatically collecting GPU-related information to automatically generating switching information by the BMC, and finally configuring, by the switching component, a topology where the GPU is located according to the switching information, thereby realizing automatic configuration.

In some possible implementations, the management chip is specifically configured to determine the target application scenario corresponding to the type identifier information in the first information according to a predefined mapping relationship between the type identifier information and application scenarios.

In the implementation, by using the predefined mapping relationship between the type identifier information and the application scenarios, the management chip may quickly and efficiently determine the target application scenario to which a user wants to apply the device after obtaining the first information.

In some possible implementations, the management chip is further specifically configured to query a preset scenario dictionary according to the target application scenario, and match to obtain a target PCle bus topology corresponding to the target application scenario, where the scenario dictionary is configured to record a mapping relationship between a plurality of application scenarios and a plurality of PCle bus topologies, and generate corresponding switching information according to the target PCle bus topology.

In the implementation, by using the predefined scenario dictionary, the management chip may quickly and efficiently determine a PCle bus topology applicable to the scenario after determining the target application scenario.

In some possible implementations, the configuration information may include target application scenario information and/or target PCle bus topology information. In this way, based on the target application scenario information or target PCle bus topology information input by the user, the management chip may generate corresponding switching information by querying the scenario dictionary or by direct generation. In this way, a requirement for the user to directly configure the PCle bus topology can be met, which is conducive to improving compatibility of the electronic device.

In some possible implementations, there are a plurality of main processors, each of the main processors is connected to a switching component through a PCle bus, and neighboring switching components are connected to each other through a PCIe bus; the plurality of graphics processing units are respectively connected to the corresponding switching component through a PCle bus; and each switching component is specifically configured to, according to the switching information, switch PCle bus connection relationships between the switching component and the graphics processing units connected thereto, between the switching component and the main processor connected thereto, and/or between the switching component and the neighboring switching component. In this way, a PCle bus network formed by the plurality of main processors and the plurality of switching components is conducive to meeting a requirement for the user to switch in corresponding graphics processing units according to different application scenarios and flexibly configure the PCle bus topology.

According to a second aspect, an embodiment of the present application provides a PCIe topology configuration method. The method is applied to an electronic device. The electronic device includes at least one main processor, a plurality of graphics processing units, and a management chip, each main processor and the plurality of graphics processing units are connected to at least one switching component through a peripheral component interconnect PCle bus, and each switching component is in communication connection with the management chip;

the method includes: obtaining, by the management chip, first information, the first information including component information and/or configuration information of each of the graphics processing units; generating, by the management chip, switching information corresponding to a target application scenario according to the first information; and transmitting, by the management chip, the switching information to the switching component to cause the switching component to switch a PCIe bus connection relationship between the plurality of graphics processing units and the corresponding main processor.

In some possible implementations, prior to the obtaining, by the management chip, the first information, the method includes: reading, by a firmware module in the electronic device, type identifier information of each of the graphics processing units, to report the type identifier information as the first information to the management chip.

In some possible implementations, the generating, by the management chip, the switching information corresponding to the target application scenario according to the first information includes: determining the target application scenario corresponding to the type identifier information in the first information according to a predefined mapping relationship between the type identifier information and the application scenario; and querying a preset scenario dictionary according to the target application scenario, and matching to obtain a target PCle bus topology corresponding to the target application scenario, where the scenario dictionary is configured to record a mapping relationship between a plurality of application scenarios and a plurality of PCle bus topologies; and generating corresponding switching information according to the target PCle bus topology.

In some possible implementations, the configuration information includes target application scenario information and/or target PCle bus topology information.

According to a third aspect, the present application provides a computer-readable storage medium storing a computer program. When the computer program is run on a processor, the processor is caused to perform the method described in the second aspect or any one possible implementation of the second aspect.

According to a fourth aspect, the present application provides a computer program product. When the computer program product is run on a processor, the processor is caused to perform the method described in the second aspect or any one possible implementation of the second aspect.

According to a fifth aspect, the present application provides a chip. The chip includes at least one processor and an interface, where the at least one processor obtains program instructions or data via the interface, and the at least one processor is configured to execute program line instructions to implement the method described in the second aspect or any one possible implementation of the second aspect.

It is understandable that beneficial effects of the above second to fifth aspects may refer to the above description of the first aspect, which are not repeated here.

### BRIEF DESCRIPTION OF DRAWINGS

FIG. 1 is a schematic diagram of a hardware structure of an electronic device according to an embodiment of the present application;
FIG. 2 is a schematic diagram of a hardware structure of an electronic device according to a specific embodiment of the present application;
FIG. 3 is an architecture diagram of an electronic device according to an embodiment of the present application;
FIG. 4 is a flowchart of a PCIe topology configuration method according to an embodiment of the present application;
FIG. 5 is a flowchart of a PCIe topology configuration method according to a specific embodiment of the present application;
FIG. 6 is a structural diagram of a PCIe topology configuration apparatus according to an embodiment of the present application; and
FIG. 7 is structural diagram of a chip according to an embodiment of the present application.

### DESCRIPTION OF EMBODIMENTS

In the context, the term "and/or" refers to an association describing associated objects, indicating that three relationships may exist, for example, A and/or B may mean that A exists alone, both A and B exist, and B exists alone. In the context, the symbol "/" denotes the associated objects are in an or relationship, for example, A/B denotes either A or B.

The terms "first" and "second" in the specification and claims herein are used to distinguish different objects, rather than to describe a particular order of objects. For example, first information and second information are used to distinguish different information rather than to describe a particular order of information.

In embodiments of the present application, the terms such as "exemplary" or "for example" are used to represent examples, illustrations, or descriptions. Any embodiment or design described as "exemplary" or "for example" in the embodiments of the present application should not be interpreted as being more preferred or advantageous than other embodiments or designs. Specifically, using the terms such as "exemplary" or "for example" is intended to present relevant concepts in a specific manner.

In the description of embodiments of the present application, unless otherwise specified, "a plurality of" refers to two or more, for example, a plurality of processing units refer to two or more processing units; for example, a plurality of elements refer to two or more elements.

For ease of understanding the technical solution of the present application, relevant terms involved in the context are explained below.

GPU (graphics processing unit): a graphics processing unit, also known as a display core, vision processor, and/or display chip, is a microprocessor that specializes in computing related to image and graphics in electronic devices (such as personal computers, workstations, servers and some mobile devices, etc.).

GPU card: a card that bears the GPU, which may also be referred to as a graphics card.

CPU (central processing unit): a central processing unit, as a computing and control core of a computer system, is a final execution unit for information processing and program running.

PCle (peripheral component interconnect express, PCI-Express): peripheral component interconnect express, is a high-speed serial computer expansion bus standard. PCle belongs to a high-speed serial point-to-point dual-channel high-bandwidth transmission. A connected device is allocated an exclusive channel bandwidth, rather than sharing a bus bandwidth. PCle mainly supports functions such as active power management, error reporting, end-to-end reliability transmission, hot plugging, and Quality of Service (QOS).

P2P (Peer to Peer): peer-to-peer network, an end-to-end transmission network.

BIOS (basic input output system): basic input output system. In fact, BIOS is a set of programs that are burned into a ROM (read-only memory) chip on a mainboard of a computer, also known as "BIOS firmware", which saves the computer's most important basic input output program, a power-on self-test program, and a system self-booting program. BIOS may read and write specific information about system settings from a random access memory CMOS RAM. The main function of BIOS is to provide the lowest level and most direct hardware settings and control for a computer. In addition, BIOS also provides some system parameters for an operation system (OS).

BMC (baseboard management controller): baseboard management controller, that is, a controller that performs remote management of a server, which may perform some operations such as firmware upgrading on a machine and checking a machine device when the machine is not powered on.

RAID (redundant arrays of independent disks): a redundant disk array.

GPU servers may be equipped with a plurality of GPU cards to perform graphics and intensive computing tasks, which are applicable to scenarios such as deep learning training, scientific computing, graphics and image processing, and video coding and decoding. The GPU servers may provide fast, stable, and flexible computing power support for automatic optical inspection, assisted driving, image processing in the medical industry, as well as edge AI accelerated computing and the like.

GPUs in the GPU server generally focus on different functions based on different types (or models). For example, some GPUs focus on training/inference, some GPUs focus on graphics rendering, and some GPUs focus on high-density computing, etc. Users select a GPU based on a scenario requirement. After a selected corresponding type of GPU is connected to a server, a PCIe topology of the GPU needs to be adapted to achieve optimal performance of the GPU server. However, a conventional manual configuration on the PCle topology is inefficient and reduces operational efficiency.

In order to improve configuration efficiency of the PCIe topology in the server and reduce manual intervention, embodiments of the present application provide a PCIe topology configuration method and apparatus, an electronic device, a computer storage medium, and a computer program product. A PCIe topology in the server is self-adaptively switched mainly based on an application scenario of the electronic device (such as the GPU server), which implements efficient configuration of the PCle topology and improves operational efficiency of the server.

For ease of understanding the technical solution of the present application, the electronic device provided in the embodiment of the present application is described below.

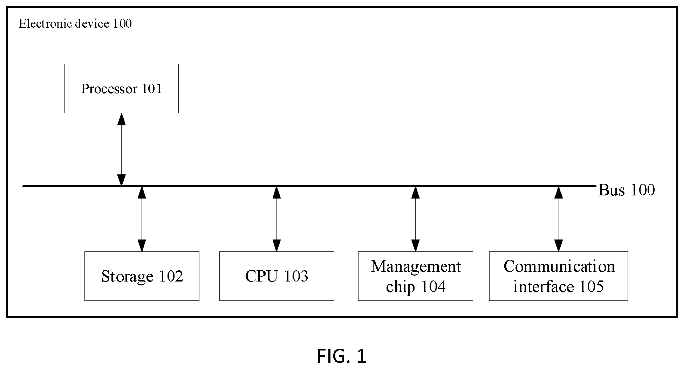

Exemplarily, FIG. 1 is a schematic diagram of a hardware structure of an electronic device. The electronic device 100 may be but is not limited to be a hardware device that can provide data processing, computing, and storage functions, such as a workstation, a GPU server, or a hyper terminal. As shown in FIG. 1, the electronic device 100 provided in the embodiment of the present application may include a processor 101, a storage 102, a graphics processor unit 103, a management chip 104, and a communication interface 105. The components of an electronic device 200 may be integrated on the mainboard, and may be connected via a bus 110 to complete communication with each other.

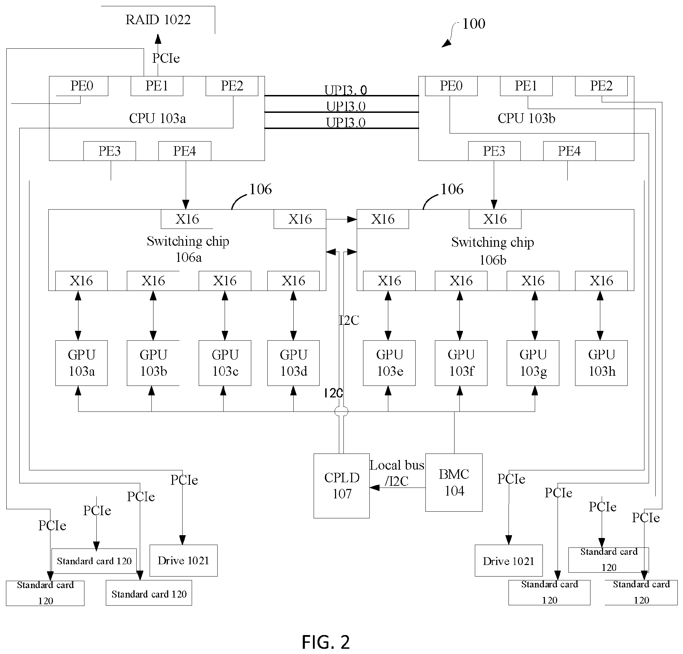

The processor 101 may include various processing devices, such as a central processing unit (central processing unit, CPU), a system on chip (system on chip, SOC), a processor integrated in the SOC, and a separate processor chip or controller. The processor 101 may further include a dedicated processing device, such as an application specific integrated circuit (application specific integrated circuit, ASIC), a field programmable gate array (a field programmable gate array, FPGA), a digital signal processor (digital signal processor, DSP) and the like. The processor 101 may be a processor group composed of a plurality of processors coupled to each other through one or more buses. For example, FIG.2 is a schematic diagram of a hardware structure of the electronic device 100 in some specific examples, which may include two CPUs (101a, 101b) on a mainboard. The CPU 101a and the CPU 101b are coupled to each other through a three-link ultra path interconnect (ultra path interconnect, UPI) bus, enabling a high-speed communication between the two processors. In addition, the CPU 101a and the CPU 101b each has a plurality of interfaces for connecting other components (for example, a drive 1021, a GPU 10 card 103, and a standard PCle card 120).

The storage 102 may be coupled to the processor 101. Specifically, the storage 102 may be coupled to the processor 101 via one or more storage controllers. The storage 102 may be configured to store computer program instructions, including a computer operation system (operation system, OS), BIOS firmware, and various programs. The storage 102 may be a non-volatile memory (non-volatile memory, NVM), such as an embedded multimedia card (embedded multi media card, EMMC), a universal flash storage (universal flash storage, UFS), or a read-only memory (read-only memory, ROM); or other types of static storage devices that may store static information and instructions; or a volatile memory (volatile memory), such as a random access memory (random access memory, RAM) or other types of dynamic storage devices that may store information and instructions; or an electrically erasable programmable read-only memory (electrically erasable programmable read-only memory, EEPROM), a compact disc read-only memory (compact disc read-only memory, CD-ROM); or other optical disk storages, magnetic disk storage media; or other storage devices; or any other computer-readable storage medium capable of being used to carry or store program codes in the form of instructions or data structures and being accessed by a computer, but not limited thereto. The storage 102 may exist independently or may be integrated with the processor 101. In some examples, as shown in FIG. 2, the CPUs (101a, 101b) each may be connected to the storage 102 such as a drive 1021 and a disk array (RAID) 1022 via an interface to support computing, processing, and other operations of the CPUs (101a, 101b).

The graphics processing unit (GPU) 103 may include, but is not limited to various types of microprocessors for graphics and intensive computing, such as GPUs for deep learning training/inference, GPUs for graphics rendering, GPUs for HPC computing. A plurality of GPUs 103 may be coupled to a processor (that is, a main processor) 101 to perform corresponding tasks based on control of the processor 101. For example, the plurality of GPUs 103 may be coupled to the processor 101 and to share a workload of a compute-intensive portion of an application when the processor 101 runs the application.

In some examples, the processor 101 may include M (M ≥ 2) CPUs, and the plurality of GPUs 103 are mounted on the M CPUs through N (N ≥ 1) switching chips (PCle Switch, PCle SW) 106. The CPU and the GPU 103 are connected to the switching chip 106 through a peripheral component interconnect express PCle bus. When N is greater than or equal to 2, two adjacent switching chips 106 are also connected through the PCIe bus. It is understandable that, PCIe SW106, as a switching component, may provide an expansion or aggregation capability and allow more devices (such as a processor 101, a GPU 103 and the like) to be connected to a PCIe port. The PCIe SW106 may identify which path a given packet needs to take based on address or other routing information, and is a PCle to PCle bridge.

For example, as shown in FIG. 2, two CPUs (101a, 101b) are mounted with 8 GPUs (103a to 103h) through two switching chips (106a, 106b). The two switching chips (106a, 106b) are also connected through a PCIe bus. Thus, through collaborative switching of the two switching chips (106a, 106b), a PCle connection relationship between all GPUs (103a to 103h) and CPUs (101a, 101b) may be controlled, thereby realizing a configuration for a connection channel between the GPU (103a) and the CPUs (101a, 101b). For example, the switching chip 106b disables a connection channel between the switching chip 106b and the CPU 101b, and enables connection channels between the switching chip 106b and the switching chip 106a and between the switching chip 106b and the GPUs 103e to 103h. The PCIe topology with this configuration makes the CPU 101a mounted with 8 GPUs (103a to 103h).

Exemplarily, as shown in FIG. 1 and FIG. 2, the electronic device 100 further includes a management chip 104. The management chip 104 may be a baseboard management controller BMC. The BMC 104 is configured to control and monitor hardware (including each GPU 103) of the electronic device 100 and hardware devices connected to the electronic device 100 (for example, a drive 1021, a disk array 1022, and a standard PCle card 120). For example, temperature, voltage, and other information of the electronic device 100 may be monitored and adjusted accordingly to ensure that the electronic device 100 is in a normal operation state. The BMC 104 may further support monitoring and management functions, such as recording information and logs of various hardware or nodes, providing event logs, and restoring control and configuration. It should to be noted that the BMC 104 is an independent device that does not rely on other hardware (for example, processor 101 or storage 102) in the electronic device 100, and does not rely on an OS. However, the BMC 104 may interact with the OS.

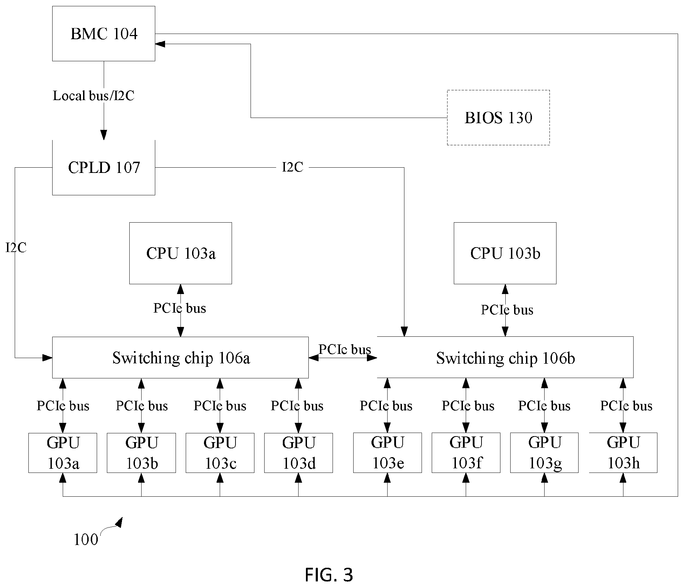

In the example, as shown in FIG. 3, a BIOS 130 in the electronic device 100 may read type identifier information (such as model, identity ID and other parameters) of each GPU (103a to 103h) connected to the PCle bus and report the type identifier information to the BMC 104. Then, the BMC 104 may analyze a current target application scenario according to the obtained information, and control the switching chips (106a, 106b) to adapt to the target application scenario to perform corresponding switching actions to complete configuration operation of the PCIe topology, thereby adapting to the target application scenario to mount the connected GPUs to the corresponding CPUs, to enable the device to achieve optimal performance.

In some specific examples, with reference to FIG. 3, a logic device (complex programmable logic device, CPLD) 107 is provided between the BMC 104 and each switching chip (106a, 106b). The BMC 104 may be connected to an input end of the logic device 107 via a bus (for example, a CPU bus localbus and a serial bus I2C), and an output end of the logic device 107 may be connected to each switching chip (106a, 106b) via a bus (for example, a serial bus I2C). In this way, the BMC 104 may transmit switching information to the logic device 107 for decoding and translating. Then, control instructions are generated and output to a corresponding switching chip (106a, 106b) to execute a switching operation.

The communication interface 105 is mainly configured to implement communication among modules, devices, units, and/or devices in the embodiments of the present application.

In the embodiment, the bus 110 includes a bus for one or more communication protocols. Also, the bus 110 includes hardware, software, or both hardware and software, which couple components of the electronic device 100 together. For example, the bus 110 may include but is not limited to the aforementioned PCle bus, UPI bus, localbus bus, I2C bus and the like. The bus 110 may further include an accelerated graphics port (AGP) or other graphics buses, an enhanced industry standard architecture (EISA) bus, a front side bus (FSB), a hypertransport (HT) interconnect, an industry standard architecture (ISA) bus, an infinite bandwidth interconnect, a low pin count (LPC) bus, a storage bus, a micro channel architecture (MCA) bus, a peripheral component interconnect (PCI) bus, a serial advanced technology attachment (SATA) bus, a video electronics standards association local bus (VLB), or other suitable buses, or a combination of two or more of these. It should be understood that, although a particular bus is described and illustrated in the embodiment of the present application, any suitable bus or interconnection is considered herein.

It is understandable that the structure illustrated in the embodiments of the present application does not constitute a specific limitation of the electronic device 100. In other embodiments of the present application, the electronic device 100 may include more or fewer components than the components in the figure, or some components that are combined, or some components that are split apart, or different component arrangements. The components shown in the figures may be implemented in hardware, software, or a combination of software and hardware.

Also, it is understandable that exemplarily embodiments of the electronic device 100 in the solution include, but are not limited to, an electronic device mounted with an iOS, Android, Windows, Harmony OS, or other operation systems.

Next, a PCIe topology configuration method provided in an embodiment of the present application is described based on the above description. It is understandable that the method is provided based on the above description and that some or all of contents of the method may refer to the above description.

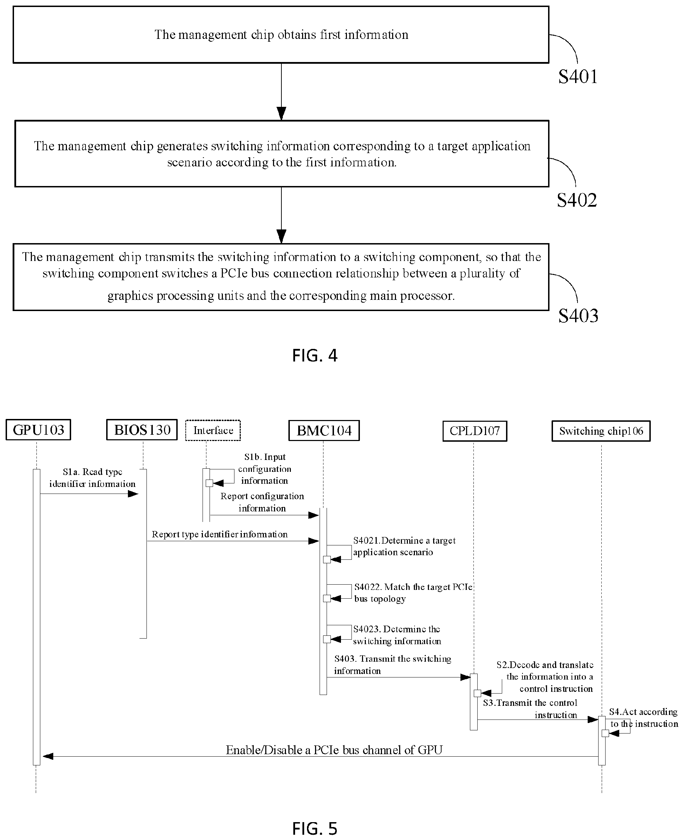

Referring to FIG. 4, FIG. 4 is a flowchart of a PCIe topology configuration method according to an embodiment of the present application. It is understandable that the method may be performed by the electronic device 100 shown in FIG. 1, FIG. 2, and FIG. 3, or by other devices or devices with computing and processing capabilities. As shown in FIG. 4, the PCIe topology configuration method may include S401 to S403.

S401. The management chip obtains first information, the first information including type identifier information and/or configuration information of each of the graphics processing units.

In the embodiment, when the electronic device 100 such as the GPU server is configured, the graphics processing unit GPU may be selected according to service requirements. For example, if the user needs to apply the electronic device in a training/inference scenario for deep learning, a GPU model that focuses on the training/inference function may be selected, for example, an NVIDIA (NVIDIA) A100 GPU. If a user needs to apply the device in a graphics processing scenario, a GPU that focuses on a graphics rendering function may be selected, for example, NVIDIA A40 GPU, and so on. After the user selects a corresponding type of GPU 103 to be mounted to a processor 101 (hereinafter referred to as "CPU" as an example), a communication path between each GPU 103 and a CPU mounted thereto is adaptively switched by the switching chip 106. In other words, a PCle bus topology where each GPU and the CPU mounted thereto may be configured by the switching chip 106. When the PCle bus topology is configured, first information monitored by the management chip BMC 104 is analyzed to identify an application scenario required by the user, thereby performing corresponding switching control on the switching chip 106, and reducing manual intervention on deployment of the PCle bus topology.

Exemplarily, as shown in FIG. 5, the first information obtained by the BMC 104 may be information reported by the BIOS 130 through S1a, or configuration information input by a user based on a management interface provided by the BMC 104 through S1b.

Examples of different sources of the first information are described in detail below.

Exemplarily, at S1a, the BIOS reads type identifier information of each graphics processing unit to report the type identifier information as the first information to the BMC 104.

In the example, referring to FIG. 1 to FIG. 3, after a selected GPU 103 is connected to the mainboard of the electronic device 100 by the user and the switching chip 106 is connected, the BIOS 130 in the electronic device 100 may automatically read type identifier information such as a model and an identity ID of each GPU 103 when a server system starts to work. Then, the BIOS 130 in the electronic device 100 reports the type identifier information to the management chip BMC 104. It is understandable that the information reported by the BIOS 130 to the management chip BMC 104 is the aforementioned first information. In this way, the management chip BMC 104 may subsequently perform the following steps of S402 to S403 to analyze and determine a scenario in which the user wants to apply the device according to the type identifier information of each GPU 103, and adaptively generate switching information indicating the configuration of a PCle bus topology suitable for the scenario.

In some specific examples, a plurality of GPUs may be evenly connected to a switching chip 106 to which a plurality of CPUs are respectively connected. Referring to FIG. 2 and FIG. 3, the CPU 101a and the CPU 101b are switched in four GPUs 103 respectively through the switching chip 106a and the switching chip 106b. In some other examples, a plurality of GPUs may also be deployed unevenly when being switched in a switching chip 106 to which the plurality of CPUs are connected. For example, two GPUs are connected to one CPU, and four GPUs are connected to another CPU. This facilitates flexible deployment of GPUs.

Exemplarily, at S1b, the management chip obtains configuration information input by the user.

In the example, the user may also input corresponding configuration information based on a peripheral device (such as a keyboard) of the electronic device 100. The configuration information may include information about a target application scenario, or information about a target PCle bus topology to be switched currently.

For example, the user may input configuration information for describing a target application scenario (such as graphics rendering, training, or HPC scenarios) based on an interface (such as a BMC management interface provided by the BMC104). The configuration information may be transmitted to the BMC 104 as the first information. It is understandable that the interface may be displayed by a hardware device such as a display to which the electronic device 100 is connected.

Alternatively, each PCIe bus channel (lane) of each switching chip 106 has a unique channel identifier. The user may further directly input information for controlling the PCIe bus channels on the switching chip 106 based on the interface, that is, information for controlling which channels are on and which channels are off on each switching chip 106. Then, configuration information describing a target PCle bus topology to be switched currently is generated. The configuration information may be transmitted to the BMC 104 as the first information.

In the embodiment, after the BMC 104 obtains the aforementioned first information transmitted from the BIOS 130 or the interface through the aforementioned S401, the following may be performed.

S402: The management chip generates switching information corresponding to the target application scenario according to the first information.

In the embodiment, the BMC 104 may analyze the first information obtained from the BIOS 130 or the management interface to generate switching information, thereby controlling the switching chip 106 connected to each GPU103, so that the switching chip 106 switches the PCIe bus channel.

Exemplarily, if the first information is information reported by the BIOS 130, when the BMC 104 performs S402, S4021 to S4023 may be specifically included.

S4021: The management chip determines the target application scenario corresponding to the type identifier information in the first information according to a predefined mapping relationship between the type identifier information and the application scenario.

In the embodiment, the mapping relationship between the type identifier information and the application scenario may be predefined. For example, a GPU with a model A100 is set to correspond to a training/inference scenario, and a GPU with a model A40 is set to correspond to a graphics rendering scenario. In this way, after obtaining the first information, the BMC 104 may automatically identify a target application scenario applicable to the GPUs, that is, a scenario to which the user wants to apply the electronic device 100, according to the type identifier information in the first information.

For example, the type identifier information reported by the BIOS 130 includes information about the A100 and A30 models. If the BMC 104 determines that the GPUs of the two models correspond to the training/inference scenario based on the predefined mapping relationship between the type identifier information and the application scenario. The training/inference scenario is determined as the target application scenario, so that the BMC 104 may analyze requirements of the user (that is, a target application scenario to which the user needs to adapt) without user intervention.

Similarly, if the type identifier information reported by the BIOS 130 includes information about four models: A40, A30, A10, and A2, and based on the predefined mapping relationship between the type identifier information and the application scenario, the BMC 104 determines that the majority of the four models of GPUs are used for graphics rendering and virtual desktops, that is, all currently connected GPUs focus on the graphics rendering/virtual desktop scenario, the graphics rendering/virtual desktop scenario may be determined as the target application scenario.

S4022: The management chip queries a scenario dictionary according to the target application scenario, and determines a target PCle bus topology corresponding to the target application scenario.

In the embodiment, in a process of the BMC 104 generating switching information, the scenario dictionary may be used to analyze the application scenario. The scenario dictionary is a predefined dictionary to record a mapping relationship between each application scenario and the PCle bus topology. The PCle bus topology includes connection relationships of the PCle bus between the CPU and the switching chip, between the switching chips, and between the switching chip and the GPU.

For example, a PCle bus topology K1 corresponding to the training/inference scenario may be defined in the scenario dictionary. As shown in FIG. 3, the training scenario needs to support a single root (single root) topology, that is, all GPUs are mounted to one CPU. Therefore, in the topology K1, the switching chip 106a may be set to enable all PCIe bus channels connected to the switching chip 106a, and the switching chip 106b disables a connection channel between the switching chip 106b itself and the CPU 101b, and enables PCle bus channels between the switching chip 106b and the switching chip 106a and between the switching chip 106b and the GPUs 103e to 103h. Similarly, in the scenario dictionary, the graphics rendering scenario may be defined to correspond to a PCle bus topology K2. The topology K2 allows all GPUs to be evenly distributed on all CPUs. In addition, a PCle bus topology K3 adapted to the HPC scenario may be further defined in the scenario dictionary, and so on, which are not specifically limited in the embodiment.

In this way, after determining the target application scenario to be configured by the user according to the first information, the BMC 104 may query the scenario dictionary to quickly and efficiently determine a target PCle bus topology adapted to the target application scenario according to the mapping relationship between the PCle bus topology and a scenario defined in the scenario dictionary.

S4023: The management chip generates switching information according to the target PCle bus topology.

In the embodiment, after determining the target PCle bus topology, the BMC 104 may generate switching information according to the topology. The switching information may be used to indicate a communication status (for example, enable or disable) of each PCIe bus channel of each switching chip 106.

For example, if the target PCle bus topology is the aforementioned topology K1, the generated switching information indicates that the switching chip 106a enables all PCIe bus channels connected to the switching chip 106a itself, and the switching chip 106b disables a connection channel between the switching chip 106b itself and the CPU 101b, and enables the PCIe bus channels between the switching chip 106b and the switching chip 106a, and between the switching chip 106b and the GPUs 103e to 103h. Similarly, if the target PCle bus topology is the aforementioned topology K2 or K3, the generated switching information indicates that each switching chip 106 configures a connection relationship set in the topology K2 or K3.

In the embodiment, after the BMC 104 generates the switching information through S402, the following S403 may be performed.

S403: The management chip transmits the switching information to a corresponding switching component, so that the switching component switches a PCIe bus connection relationship between a plurality of graphics processing units and the corresponding main processor.

In the embodiment, referring to FIG. 5, the BMC 104 generates switching information. The BMC 104 may transmit the switching information to a logic device CPLD 107 through its interface. The CPLD 107 performs S2 to decode and translate the information into a control instruction. Then, S3 is performed to transmit the control instruction from the corresponding bus to the switching chip 106, so that the switching chip 106 performs S4 to act (or not act) according to the instruction, and enables/disables a PCIe bus channel of the GPU to form a PCle bus topology adapted to a user requirement scenario.

For example, as shown in FIG. 3, if the target PCle bus topology corresponding to the switching information is the above topology K1, the switching information is translated by the CPLD 107 and then sent to the switching chip 106a and the switching chip 106b respectively, so that the switching chip 106a enables all the PCIe bus channels connected to the switching chip 106a itself, and the switching chip 106b disables a connection channel between the switching chip 106b itself and the CPU 101b, and enables PCle bus channels between the switching chip 106b itself and the switching chip 106a and between the switching chip 106b itself and the GPUs 103e to 103h. In the PCIe bus topology, the GPUs (103a to 103d) and the GPUs (103e to 103h) may realize P2P communication through the switching chips (106a, 106b), and all the GPUs (103a to 103h) are mounted to the CPU 101a.

Similarly, if the target PCle bus topology corresponding to the switching information is the above topology K2, the switching information is translated by the CPLD 107 and sent to the switching chips 106a and 106b respectively. The switching chips 106a and 106b respectively enable channels between the CPUs and GPUs connected thereto, so that the GPUs (103a to 103d) are mounted to the CPU 101a, and the GPUs (103e to 103h) are mounted to the CPU 101b.

In this way, a closed-loop control chain of "GPU 103→BMC 104→CPLD 107→PCIe SW106→GPU 103" is formed from the automatic collection of the type identifier information of the GPU 103 by the BIOS 130, to the automatic identification of an application scenario and determination of switching information by the BMC 104, and then the translation and transmission by the logic device 107, and finally to the switching of a communication channel between the GPU 103 and the GPU by the switching chip 106. The GPU 103 is used as an input control point, and different PCIe topologies are determined based on different scenarios in which the GPU is used. That is, the method in the embodiment may automatically identify a GPU type, thereby automatically matching a PCIe high-speed topology, and implementing adaptive control over a PCle bus topology configuration. This ensures an optimal application performance of the electronic device 100, reduces manual intervention, improves machine deployment efficiency, and improves operation efficiency for the customer.

In other possible implementations, if the first information is configuration information obtained from the management interface for describing application scenario information, the BMC 104 may perform the steps in S4022 to S4023 and S403 directly according to the configuration information. A switching information is generated adaptively and sent to the switching chip 106 to control the switching chip 106 to configure the PCle bus topology suitable for the application scenario.

If the first information is the configuration information obtained from the management interface and for describing the PCle bus topology information to be switched currently, the BMC 104 may directly perform the aforementioned steps of S4023 and S403, and generate one piece of switching information and send the same to the switching chip 106. In this way, the switching chip 106 is controlled to configure the PCle bus topology suitable for the application scenario.

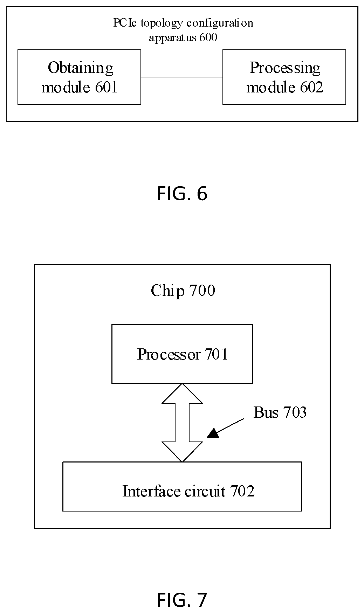

Based on the method in the above embodiments, a PCIe topology configuration apparatus is provided in an embodiment of the present application. As shown in FIG. 6, FIG. 6 is a structural diagram of a PCIe topology configuration apparatus according to an embodiment of the present application. It is understandable that the apparatus may be deployed in the electronic device 100 shown in FIG. 1, FIG. 2, and FIG. 3, or other apparatuses or devices with computing and processing capabilities.

As shown in FIG. 6, a PCIe topology configuration apparatus 600 may include an obtaining module 601 and a processing module 602. The obtaining module 601 may be configured to obtain first information, the first information including type identifier information and/or configuration information of each graphics processing unit. The processing module 602 may be configured to generate switching information corresponding to a target application scenario according to the first information. In addition, the processing module 602 may be further configured to transmit the switching information to a corresponding switching component, so that the switching component switches a PCIe bus connection relationship between a plurality of graphics processing units and a corresponding main processor.

In some embodiments, the processing module 602 may be specifically configured to determine a target application scenario corresponding to the type identifier information in the first information according to a predefined mapping relationship between the type identifier information and the application scenario, query a preset scenario dictionary according to the target application scenario, and match to obtain a target PCle bus topology corresponding to the target application scenario. The scenario dictionary is used to represent a mapping relationship between a plurality of application scenarios and a plurality of PCle bus topologies, and generate the corresponding switching information according to the target PCle bus topology.

It should be understood that the above apparatus is configured to perform the method in the above embodiments. The implementation principle and technical effects of corresponding program modules in the apparatus are similar to those described in the above method. The working process of the apparatus may refer to a corresponding process in the above method, which is not repeated herein.

Based on the method in the above embodiments, the present application provides a computer readable storage medium. The computer readable storage medium stores a computer program, and when the computer program is run on a processor, the processor is caused to perform the method in the above embodiments.

Based on the method in the above embodiments, the embodiment of the present application provides a computer program product, and when the computer program product is run on a processor, the processor is caused to perform the method in the above embodiments.

Based on the method in the above embodiments, a chip is further provided in the embodiment of the present application. As shown in FIG. 7, FIG. 7 is a structural diagram of a chip according to an embodiment of the present application. As shown in FIG. 7, a chip 700 includes one or more processors 701 and an interface circuit 702. Alternatively, the chip 700 may further include a bus 703.

The processor 701 may be an integrated circuit chip with a signal processing capability. During implementation, the steps of the above method may be accomplished by an integrated logic circuit or an instruction in form of software in the processor 701. The processor 701 may be a general-purpose processor, a digital signal processor (DSP), an application-specific integrated circuit (ASIC), a field programmable gate array (FPGA) or other programmable logic device, discrete gate, transistor logic device, and discrete hardware component. The methods and steps disclosed in the embodiments of the present application may be implemented or executed. The general-purpose processor may be a microprocessor or any conventional processor.

The interface circuit 702 may be configured to send or receive data, instructions, or information. The processor 701 may process data, instructions, or other information received by the interface circuit 702, and send the processed information through the interface circuit 702.

Optionally, the chip 700 further includes a storage. The storage may include a read-only memory and a random access memory, and provides operational instructions and data for the processor. A portion of the storage may further include non-volatile random access memory (NVRAM).

Optionally, the storage stores an executable software module or a data structure, and the processor may perform a corresponding operation by calling an operation instruction stored in the storage (the operation instruction may be stored in the operation system).

Optionally, the interface circuit 702 may be configured to output an execution result of the processor 701.

It should be noted that corresponding functions of the processor 701 and the interface circuit 702 may be realized through hardware design, software design, or hardware-software design. The functions of the processor 701 and the interface circuit 702 are not limited herein.

It should be understood that steps of the above method embodiments may be completed by a logic circuit in the form of hardware or an instruction in the form of software in the processor.

It is understandable that sequence numbers of the steps in the above embodiments do not indicate an execution sequence. The execution sequence of each process is determined by its functions and inherent logic, and should not be construed as a limitation of the implementation process in the embodiments of the present application. In addition, in some possible implementations, the steps in the above embodiments may be selectively performed according to the actual situation, or may be partially or completely performed, which are not limited herein.

The method steps in the embodiments of the present application may be implemented by hardware or by executing software instructions by a processor. The software instructions may consist of corresponding software modules that may be stored in a random access memory (random access memory, RAM), a flash memory, a read-only memory (read-only memory, ROM), a programmable read-only memory (programmable rom, PROM), an erasable programmable read-only memory (erasable PROM, EPROM), an electrically erasable programmable read-only memory (electrically EPROM, EEPROM), a register, a drive, a portable drive, a CD-ROM, or any other form of storage media known in the art. An example storage medium is coupled to the processor so that the processor can read information from the storage medium and write information to the storage medium. Of course, the storage medium may also be a component of the processor. The processor and the storage media may be located in an ASIC.

The above embodiments may be implemented in whole or in part by software, hardware, firmware, or any combination. When implemented by software, they may be implemented in whole or in part as a computer program product. The computer program product includes one or more computer instructions. When the computer program instructions are loaded and executed on a computer, processes or functions in the embodiments of the present application are generated in whole or in part. The computer may be a general-purpose computer, a special purpose computer, a computer network, or other programmable devices. The computer instructions may be stored in a computer-readable storage medium or transmitted via the computer-readable storage medium.

It is understandable that various numerical numbers in the embodiments of the present application are merely a convenient distinction for description and are not intended to limit the scope of the embodiments of the present application.

## Claims

1. An electronic device, comprising at least one main processor, a plurality of graphics processing units, and a management chip, wherein each main processor and the plurality of graphics processing units are connected to at least one switching component through a peripheral component interconnect PCle bus, and each switching component is in communication connection with the management chip;
the management chip is configured to generate switching information corresponding to a target application scenario according to first information, wherein the first information comprises type identifier information and/or configuration information of each of the graphics processing units; and
the switching component is configured to switch a PCIe bus connection relationship between the plurality of graphics processing units and the corresponding main processor according to the switching information.

2. The electronic device according to claim 1, comprising a firmware module, wherein the firmware module is configured to read the type identifier information of each of the graphics processing units, to report the type identifier information as the first information to the management chip.

3. The electronic device according to claim 1 or 2, wherein the management chip is specifically configured to:
determine the target application scenario corresponding to the type identifier information in the first information according to a preset mapping relationship between the type identifier information and application scenarios.

4. The electronic device according to claim 3, wherein the management chip is further specifically configured to:
query a preset scenario dictionary according to the target application scenario, and match to obtain a target PCle bus topology corresponding to the target application scenario, wherein the scenario dictionary is configured to record a mapping relationship between a plurality of application scenarios and a plurality of PCle bus topologies; and
generate corresponding switching information according to the target PCle bus topology.

5. The electronic device according to claim 1, wherein the configuration information comprises target application scenario information and/or target PCle bus topology information.

6. The electronic device according to any one of claims 1 to 5, wherein there are a plurality of main processors, each of the main processors is connected to a switching component through a PCle bus, and neighboring switching components are connected with each other through a PCIe bus;
the plurality of graphics processing units are respectively connected to the corresponding switching component through a PCle bus; and
each switching component is specifically configured to, according to the switching information, switch PCle bus connection relationships between the switching component and the graphics processing units connected thereto, between the switching component and the main processor connected thereto, and/or between the switching component and the neighboring switching component.

7. A PCIe topology configuration method, applied to an electronic device, wherein the electronic device comprises at least one main processor, a plurality of graphics processing units, and a management chip, each main processor and the plurality of graphics processing units are connected to at least one switching component through a peripheral component interconnect PCle bus, and each switching component is in communication connection with the management chip;
wherein the method comprises:
obtaining, by the management chip, first information, the first information comprising component information and/or configuration information of each of the graphics processing units;
generating, by the management chip, switching information corresponding to a target application scenario according to the first information; and
transmitting, by the management chip, the switching information to the switching component to cause the switching component to switch a PCIe bus connection relationship between the plurality of graphics processing units and the corresponding main processor.

8. The method according to claim 7, prior to the obtaining, by the management chip, the first information, the method comprises:
reading, by a firmware module in the electronic device, type identifier information of each of the graphics processing units, to report the type identifier information as the first information to the management chip.

9. The method according to claim 7 or 8, wherein the generating, by the management chip, the switching information corresponding to the target application scenario according to the first information comprises:
determining the target application scenario corresponding to the type identifier information in the first information according to a preset mapping relationship between the type identifier information and the application scenario; and
querying a preset scenario dictionary according to the target application scenario, and matching to obtain a target PCle bus topology corresponding to the target application scenario, wherein the scenario dictionary is configured to record a mapping relationship between a plurality of application scenarios and a plurality of PCle bus topologies; and
generating corresponding switching information according to the target PCle bus topology.

10. The method according to claim 7, wherein the configuration information comprises target application scenario information and/or target PCle bus topology information.
